# EUROPEAN PATENT SPECIFICATION

(11) **EP 4 300 660 B1**
(45) Date of publication and mention of the grant of the patent: **01.04.2026**
(21) Application number: 22831805.1
(22) Date of filing: 22.06.2022
(51) Int. Cl.: H01M 10/615, H01M 10/6571, H01M 50/204

(54) **BATTERY PACK**
BATTERIEPACK
BLOC-BATTERIE

(30) Priority: 30.06.2021 CN 202110739653
(43) Date of publication of application: 03.01.2024
(73) Proprietor: BYD Company Limited, Shenzhen, Guangdong 518118 (CN)
(72) Inventor: XIONG, Bojun, Shenzhen, Guangdong 518118 (CN); PENG, Qingbo, Shenzhen, Guangdong 518118 (CN); YI, Ning, Shenzhen, Guangdong 518118 (CN)
(74) Representative: Dehns Germany Partnerschaft mbB
(86) International application number: PCT/CN2022/100482
(87) International publication number: WO 2023/273989

(56) References cited:
- CN-A- 109 148 771
- CN-A- 113 054 299
- CN-U- 212 485 392
- CN-U- 215 119 037
- DE-A1- 102019 216 968
- JP-A- 2018 032 591
- US-A1- 2013 004 822
- US-A1- 2017 222 285
- US-A1- 2020 057 459
- US-A1- 2020 161 728

## Description

### FIELD

The present invention relates to the technical field of battery packs, and more specifically, to a battery pack.

### BACKGROUND

In the related art, a cooling structure is arranged in a battery box. However, the cooling structure may cool only a cell inside the battery box. As a result, a distribution box cannot be effectively cooled, or another cooling structure needs to be arranged, which leads to high overall design costs and reduces working performance of the battery pack.

Document CN 109148771 A discloses a battery pack, comprising a lower housing and a liquid cooling assembly. The lower shell is provided with an outer side beam, and the outer side beam is internally provided with a cavity structure. The liquid cooling assembly comprises a collecting pipe and a liquid cooling plate, wherein the collecting pipe is arranged in the cavity structure, the liquid cooling plate is arranged in a battery module mounting space inside the lower housing, and the collecting pipe communicates with the liquid cooling plate.

### SUMMARY

The present invention is intended to resolve at least one of the technical problems existing in the related art. The present invention provides a battery pack according to claim 1. In the battery pack, through arrangement of a whole flow channel that communicates a thermoregulation member with a panel, not only a cell of the battery pack can be cooled, but also electrical elements in a distribution box can be cooled. In this way, relatively few cooling structures are required, and cooling costs are relatively low.

The present invention relates to a battery pack and to a vehicle with the features of the independent claim.

The battery pack of the present invention includes a battery box and a thermoregulation member. The battery box has a distribution cavity. A distribution box is arranged in the distribution cavity. The distribution box includes a panel. The panel has a first flow channel and a refrigerant inlet/outlet joint in communication with the first flow channel. The thermoregulation member is connected with the battery box. The thermoregulation member has a second flow channel connected with the first flow channel.

In the battery pack in the embodiments of the present invention, through connection between the thermoregulation member and the battery box and arrangement of the whole flow channel that communicates the thermoregulation member with the panel, not only a cell can be cooled, but also electrical elements in the distribution box can be cooled, so that the thermoregulation member and the panel do not need to be provided with additional pipe joints. Therefore, a quantity of pipe joints is reduced, relatively few cooling structures are required, cooling costs are relatively low, and life degradation of the cell caused by non-uniform temperatures can be reduced.

In the battery pack in some embodiments of the present invention, the thermoregulation member is arranged below the battery box. A liquid cooling avoidance port is arranged on a bottom wall of the distribution cavity. An adapter of the second flow channel extends through the liquid cooling avoidance port and is in communication with the first flow channel.

In the battery pack in some embodiments of the present invention, the liquid cooling avoidance port is constructed as an oblong port. The adapter includes an adapter inlet and an adapter outlet. The adapter inlet and the adapter outlet both extend into the distribution cavity through the liquid cooling avoidance port.

According to the present invention, the refrigerant inlet/outlet joint includes an outer inlet and an outer outlet arranged on an outer side surface of the panel. The outer inlet may be in communication with the adapter inlet. The outer outlet may be in communication with the adapter outlet. According to the invention, the outer inlet and the outer outlet are configured to be in communication with an external pipeline.

According to the present invention, a mounting port in communication with outside is arranged in the distribution cavity. According to the present invention, the panel is arranged directly facing the mounting port. The outer inlet and the outer outlet extend out through the mounting port.

According to the present invention, the battery box includes a box portion and a sealing cover. The thermoregulation member is connected with the box portion. The sealing cover is mounted to an end portion of the box portion to define the distribution cavity with the box portion. The sealing cover is provided with the mounting port.

The battery pack in some embodiments of the present invention further includes a bottom protection plate. The bottom protection plate is arranged to cover a bottom of the battery box. The thermoregulation member is located between the battery box and the bottom protection plate.

The battery pack in some embodiments of the present invention further includes a heating film. The heating film is mounted above or below the battery box. The heating film is electrically connected with the distribution box.

In the battery pack in some embodiments of the present invention, the heating film is arranged between the battery box and the thermoregulation member. A lead avoidance port is arranged on the bottom wall of the distribution cavity. The lead avoidance port is spaced apart from the liquid cooling avoidance port. An electrode lead of the heating film extends through the lead avoidance port and is electrically connected with the distribution box.

In the battery pack in some embodiments of the present invention, the heating film is arranged above the battery box. A top wall of the battery box is provided with the lead avoidance port. The electrode lead of the heating film extends through the lead avoidance port and is electrically connected with the distribution box.

The battery pack in some embodiments of the present invention further includes a sealing plate. The sealing plate is mounted above the battery box. The heating film is located between the sealing plate and the battery box.

In the battery pack in some embodiments of the present invention, the bottom protection plate includes a groove or recess area recessed downward and a connection turnup surrounding the groove area. The connection turnup is configured to be detachably connected with the battery box. The thermoregulation member is mounted in the groove or recess area.

According to the present invention, the battery box further includes a cell mounting cavity. The cell mounting cavity is configured to for a cell to be mounted. The distribution cavity is located at an end portion of the cell mounting cavity. The cell is electrically connected with the distribution box.

Additional aspects and advantages of the present invention are partially provided in the following description, some of which will become apparent from the following description or may be learned from practices of the present invention.

### BRIEF DESCRIPTION OF THE DRAWINGS

The above and/or additional aspects and advantages of the present invention will become apparent and comprehensible from description of embodiments provided with reference to the following drawings.
FIG. 1 is an exploded view of a battery pack according to an embodiment of the present invention.
FIG. 2 is an enlarged view of A in FIG. 1.
FIG. 3 is a schematic structural diagram (a heating film is connected with a distribution box) of a heating circuit of a heating film of the battery pack according to an embodiment of the present invention.
FIG. 4 is an exploded view of the battery pack according to some other embodiments of the present invention.
FIG. 5 is an enlarged view of B in FIG. 4.
FIG. 6 is a schematic diagram of a vehicle according to the present invention;
FIG. 7 is a sectional view of a panel fitted with a thermoregulation member according to the present invention.
FIG. 8 is a schematic diagram of the thermoregulation member according to the present invention.

### DETAILED DESCRIPTION

Embodiments of the present invention are described in detail below, and examples of the embodiments are shown in the drawings, where the same or similar elements or the elements having the same or similar functions are represented by the same or similar reference numerals throughout the description. The embodiments described below with reference to the drawings are exemplary and used only for explaining the present invention, and should not be construed as a limitation on the present invention.

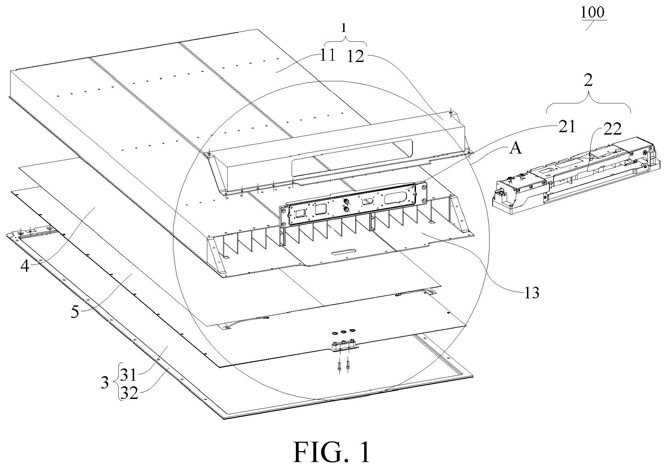

A battery pack 100 in the embodiments of the present invention is described below with reference to FIG. 1 to FIG. 8.

As shown in FIG. 1, FIG. 4, and FIG. 7, the battery pack 100 in the embodiments of the present invention includes a battery box 1 and a thermoregulation member 5.

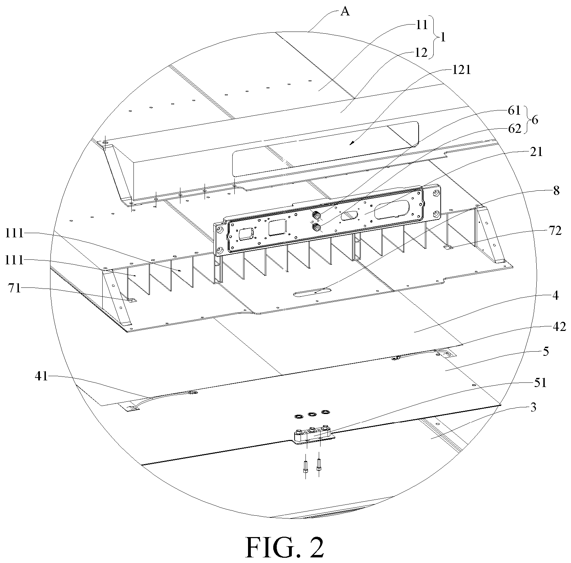

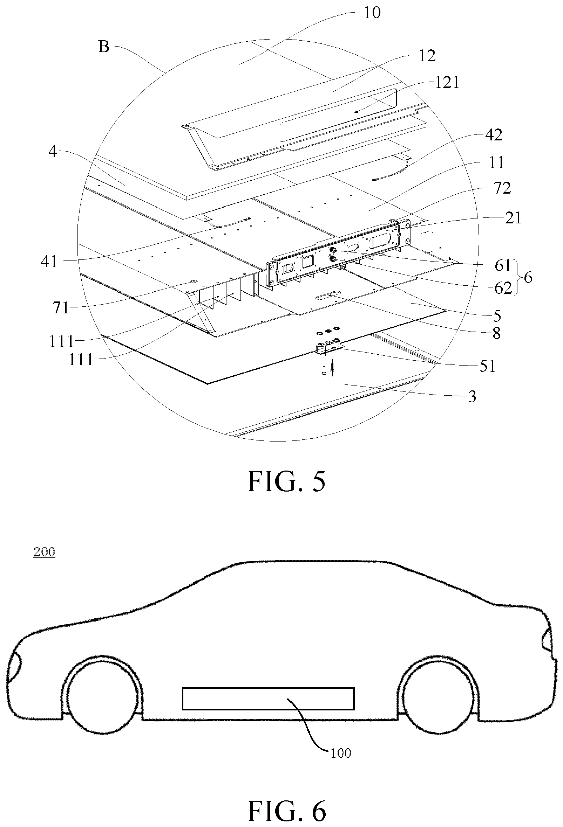

The battery box 1 may be made of an aluminum alloy material, so as to reduce an entire weight of the battery pack 100 and achieve a lightweight design of the battery pack 100. The battery box 1 may be constructed as a hollow cavity structure, in which a mounting space is formed to facilitate mounting of a cell inside the battery box 1, so that the battery box 1 can support and protect the cell, thereby ensuring stability of the cell. In addition, the battery box 1 has a distribution cavity 13. The distribution cavity 13 is formed on an upper side of the battery box 1, and a distribution box 2 is arranged in the distribution cavity 13, which facilitates mounting of the distribution box 2 in the distribution cavity 13, thereby reducing difficulty in mounting the distribution box 2, implementing quick mounting, and facilitates power distribution for the cell inside the battery box 1. The distribution box 2 may include a distribution assembly or a distribution module 22 and a panel 21. The panel 21 is fixedly connected with the distribution module 22, and the panel 21 is provided with a refrigerant inlet/outlet joint 6 exposed to the battery box 1. The panel 21 is provided with a first flow channel 103 and the refrigerant inlet/outlet joint 6 in communication with the first flow channel 103. As shown in FIG. 2 and FIG. 5, the refrigerant inlet/outlet joint 6 is arranged on the panel 21 and is exposed away from the battery box 1, to facilitate communication of the refrigerant inlet/outlet joint 6 with an external pipeline, thereby reducing difficulty in connecting to the external pipeline, improving assembly efficiency, facilitating disassembly of the external pipeline, and reducing maintenance costs.

The thermoregulation member 5 is connected with the battery box 1, and the thermoregulation member 5 has a second flow channel 104 in communication with the first flow channel 103. That is to say, the first flow channel 103 and the second flow channel 104 may be in communication with the external pipeline through the refrigerant inlet/outlet joint 6. It may be understood that the thermoregulation member 5 may be connected to the battery box 1 through a thermally conductive structural adhesive, to fixedly mount the thermoregulation member 5 to the battery box 1, thereby ensuring stability of the connection between the thermoregulation member and the battery box. In addition, the first flow channel 103 and the second flow channel 104 may be in communication with the external pipeline through the refrigerant inlet/outlet joint 6, so that a refrigerant may flow in the first flow channel 103 to cool the distribution box 2. Moreover, the refrigerant may flow to the second flow channel 104 through the first flow channel 103 to cool the cell, which facilitates temperature control of the cell in the battery box 1. In this way, surroundings of the cell are in an environment with a uniform temperature during heating or cooling, which reduces life degradation of the cell caused by non-uniform temperatures.

In the battery pack 100 in the embodiments of the present invention, through arrangement of the whole flow channel that communicates the thermoregulation member 5 with the panel 21, not only the cell can be cooled, but also electrical elements in the distribution box 2 can be cooled, so that the thermoregulation member 5 and the panel 21 do not need to be provided with additional pipe joints. Therefore, a quantity of pipe joints is reduced, relatively few cooling structures are required, and cooling costs are relatively low.

In some embodiments, the thermoregulation member 5 is arranged below the battery box 1. The thermoregulation member is connected to the battery box through the thermally conductive structural adhesive, to fixedly mount the thermoregulation member 5 below the battery box 1, thereby ensuring the stability of the connection between the thermoregulation member and the battery box. As shown in FIG. 2, a lead avoidance port and a liquid cooling avoidance port 8 are arranged on a bottom wall of the distribution cavity 13 spaced apart from each other, to reduce difficulty in forming the lead avoidance port and the liquid cooling avoidance port, and to shield the lead avoidance port and the liquid cooling avoidance port 8 through the distribution box 2. In this way, water can be prevented from entering the lead avoidance port and the liquid cooling avoidance port 8, and the lead avoidance port and the liquid cooling avoidance port 8 become invisible when viewed from outside of the battery pack 100, thereby enhancing safety of the battery pack.

An adapter of the second flow channel 104 extends through the liquid cooling avoidance port 8 and is in communication with the first flow channel 103. That is to say, the liquid cooling avoidance port 8 is configured to give way to an adapter 51 of the thermoregulation member 5, and the adapter is in communication with the first flow channel 103 and the second flow channel 104 simultaneously. In other words, the thermoregulation member 5 is directly connected to the refrigerant inlet/outlet joint 6 through the liquid cooling avoidance port 8, which reduces a distance of connection between the thermoregulation member and the refrigerant inlet/outlet joint, reduces an entire volume of the battery pack 100, and facilitates formation of a refrigerant circuit between the thermoregulation member 5 and the refrigerant inlet/outlet joint 6. That is to say, the refrigerant may move to the thermoregulation member 5 through the distribution box 2, so that the cell may be heated or cooled through the thermoregulation member 5, thereby ensuring that the cell is in a relatively uniform temperature condition, improving a service life of the cell, avoiding thermal runaway of the cell caused by a high temperature, and enhancing safety of the battery pack 100.

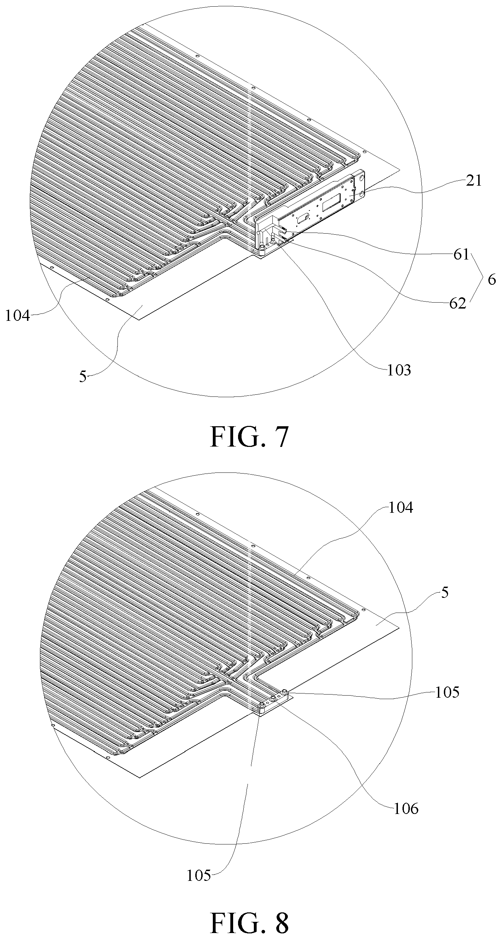

As shown in FIG. 2 and FIG. 8, the liquid cooling avoidance port 8 may be constructed as an oblong port. In this way, processing difficulty is reduced, and an adapter inlet 105 and an adapter outlet 106 of the thermoregulation member 5 both may extend to the distribution cavity 13 through the liquid cooling avoidance port 8. It should be noted that, the adapter 51 includes the adapter inlet 105 and the adapter outlet 106. The adapter inlet 105 and the adapter outlet 106 of the adapter 51 both extend into the distribution cavity 13 through the liquid cooling avoidance port 8, and are connected with a bottom wall of the panel 21, and are fixed at a joint between the thermoregulation member 5 and the distribution box 2 through a fixing structure. The fixing structure may be a bolt. In this way, the stability of the connection between the thermoregulation member 5 and the distribution box 2 is enhanced.

The first flow channel 103 includes a bottom inlet and a bottom outlet arranged on the bottom wall of the panel 21. The bottom inlet is connected with the adapter inlet 105, and the bottom outlet is connected with the adapter outlet 106. In this way, the refrigerant may enter an outer inlet 61 through the external pipeline, and then successively pass through the bottom inlet, the adapter inlet 105, the adapter outlet 106, the bottom outlet, and an outer outlet 62. Therefore, the distribution box 2 and the cell can be effectively cooled, so that a high temperature of the distribution box 2 and the cell can be avoided, and it is ensured that the cell is in a working environment with a normal temperature, thereby enhancing the safety of the battery pack 100.

In some embodiments, as shown in FIG. 2, a mounting port 121 in communication with outside is arranged in the distribution cavity 13, and the panel 21 is arranged directly facing the mounting port 121. It may be understood that the mounting port 121 can be constructed as an elongated hole. The mounting port 121 is configured to give way to the panel 21, which facilitates user operations on the panel 21, thereby improving convenience of the user operations.

As shown in FIG. 2, the refrigerant inlet/outlet joint 6 includes the outer inlet 61 and the outer outlet 62 arranged on the panel 21. The outer inlet 61 and the outer outlet 62 are both located on the panel 21, and the outer inlet 61 and the outer outlet 62 extend through the mounting port 121 to outside of the mounting port 121, so that the outer inlet 61 and the outer outlet 62 can be in communication with the external pipeline, which reduces difficulty in connecting to the external pipeline, improves assembly efficiency, facilitates disassembly of the external pipeline, reduces maintenance costs, and facilitates user operations on the distribution box 2 through the panel 21 at the mounting port 121, thereby enhancing safety and practicality of the distribution box 2.

As shown in FIG. 1 and FIG. 2, in some embodiments, the battery box 1 includes a box portion 11 and a sealing cover 12.

A heating film 4 is connected with the box portion 11, which is configured to be turned on at a low temperature to heat the battery pack 100, so as to achieve thermal uniformity of the battery pack 100, thereby improving the service life of the cell. In addition, the heating film 4 is mounted to an outer side of the battery box 1 and is connected through a thermally conductive structural adhesive, so that surroundings of the cell can be in an environment with a uniform temperature during heating or cooling through high thermal conductivity of the aluminum alloy battery box, thereby reducing life degradation of lithium batteries caused by non-uniform temperatures.

The sealing cover 12 may be constructed as a structure with an opening. The sealing cover 12 is mounted to an end portion of the box portion 11 and defines the distribution cavity 13 with the box portion 11, so as to fixedly mount the distribution box 2 in the distribution cavity 13, thereby preventing displacement or detachment of the distribution box 2, and enhancing stability of the distribution box 2. Moreover, the opening of the sealing cover 12 is recessed away from an upper surface of the box portion 11, so as to mount the sealing cover 12 on an upper side of the box portion 11. Further, the sealing cover 12 and the box portion 11 jointly define the distribution cavity 13 for mounting the distribution box 2. The sealing cover 12 is provided with the mounting port 121. The mounting port 121 is arranged on a side wall of the sealing cover 12. The mounting port 121 may be constructed as an elongated hole. The mounting port 121 is configured to give way to the panel 21, to facilitate user operations, thereby improving convenience of the user operations. It may be understood that during specific mounting, the distribution box 2 may be first mounted to an upper surface of the box portion 11, then the sealing cover 12 is mounted to the distribution box 2, and the panel 21 protrudes out through the mounting port 121. In this way, the sealing cover 12 can protect the distribution box 2, which prevents the distribution box 2 from direct impact, and facilitates the user operations on the distribution box 2 through the panel 21 at the mounting port 121, thereby enhancing the safety and practicality of the distribution box 2.

It should be noted that, the sealing cover 12 and the upper surface of the box portion 11 are sealed by using a bolt and a compressible material through mechanical compression. The level of the sealing is IP67, which enhances the sealing and safety of the battery pack 100.

In some embodiments, the battery pack 100 further includes a bottom protection plate 3. The bottom protection plate 3 may be constructed as a plate-shaped structure, so as to facilitate mounting of the bottom protection plate 3 below the battery box 1, thereby protecting the battery box 1 through the bottom protection plate 3. In this way, a bottom of the battery box 1 can be prevented from direct impact, thereby enhancing the safety of the battery pack 100.

The bottom protection plate 3 is mounted to the bottom of the battery box 1, and the thermoregulation member 5 is located between the battery box 1 and the bottom protection plate 3, so that the bottom protection plate 3 can support and protect the thermoregulation member 5, thereby preventing detachment or displacement of the thermoregulation member 5, and enhancing stability of the thermoregulation member 5. In addition, the thermoregulation member 5 is arranged between a bottom wall of the battery box 1 and the bottom protection plate 3, so that the surroundings of the cell can be in an environment with a uniform temperature during heating or cooling through control of the thermoregulation member 5, thereby reducing life degradation of lithium batteries caused by non-uniform temperatures.

It should be noted that, the bottom protection plate 3 and a lower surface of the battery box 1 are sealed by using a bolt and a compressible material. In this way, the thermoregulation member 5 can be reliably sealed between the battery box 1 and the bottom protection plate 3, and thus can be in a stable working environment, thereby improving the sealing and safety of the battery pack 100.

In some embodiments, the battery pack 100 further includes a heating film 4. The heating film 4 is mounted above or below the battery box 1, and the heating film 4 is electrically connected with the distribution box 2. For example, the heating film 4 is mounted above the battery box 1, or the heating film 4 is mounted below the battery box 1. In other words, a mounting position of the heating film 4 may be designed according different mounting requirements. The heating film 4 is arranged on the outer side of the battery box 1, which is configured to be turned on at a low temperature to heat the battery pack 100, so as to achieve thermal uniformity of the battery pack 100, thereby improving the service life of the cell. In addition, the heating film 4 is mounted to the outer side of the battery box 1 and is connected through a thermally conductive structural adhesive, so that the surroundings of the cell can be in an environment with a uniform temperature during heating or cooling through the high thermal conductivity of the aluminum alloy battery box, thereby reducing life degradation of lithium batteries caused by non-uniform temperatures.

As shown in FIG. 1 and FIG. 2, the heating film 4 is arranged between the battery box 1 and the thermoregulation member 5. The bottom wall of the distribution cavity 13 is provided with the lead avoidance port. The lead avoidance port and the liquid cooling avoidance port 8 are spaced apart from each other, to reduce the difficulty in forming the lead avoidance port and the liquid cooling avoidance port, and to shield the lead avoidance port and the liquid cooling avoidance port 8 through the distribution box 2. In this way, water can be prevented from entering the lead avoidance port and the liquid cooling avoidance port 8, and the lead avoidance port and the liquid cooling avoidance port 8 become invisible when viewed from the outside of the battery pack 100, thereby enhancing the safety of the battery pack.

An electrode lead of the heating film 4 extends through the lead avoidance port and is electrically connected with the distribution box 2. It may be understood that, the heating film 4 is mounted below the battery box 1, the thermoregulation member 5 is also mounted below the battery box 1, the heating film 4 is electrically connected with the distribution box 2, and the bottom wall of the distribution cavity 13 is provided with the lead avoidance port. It may be understood that, in some embodiments, as shown in FIG. 1, the heating film 4 and the thermoregulation member 5 are mounted below the battery box 1. That is to say, the heating film 4 and the thermoregulation member 5 are snugly attached to a low part of the battery box 1 in sequence and are connected through the thermally conductive structural adhesive. In this way, the high heat conductivity can be achieved through the aluminum alloy battery box 1.

The lead avoidance port includes a positive avoidance port 71 and a negative avoidance port 72. The positive avoidance port 71 and the negative avoidance port 72 both may be constructed as square holes, so as to reduce difficulty in forming the positive avoidance port and the negative avoidance port, and to facilitate mounting and connection of another structure. As shown in FIG. 2, the positive avoidance port 71 and the negative avoidance port 72 are respectively located in two end areas of the bottom wall of the battery box 1. In other words, the positive avoidance port 71 and the negative avoidance port 72 are spaced apart on the bottom wall of the battery box 1.

Specifically, the electrode lead of the heating film 4 includes a positive lead 41 and a negative lead 42. The positive lead 41 of the heating film 4 extends through the positive avoidance port 71 and is electrically connected with the distribution box 2. The negative lead 42 of the heating film 4 extends through the negative avoidance port 72 and is electrically connected with the distribution box 2. That is to say, the electrode lead of the heating film 4 directly passes through the lead avoidance port and is electrically connected with the distribution box 2, which reduces a distance of connection between the electrode lead and the distribution box, reduces an entire volume of the battery pack 100, and facilitates formation of a heating circuit between the heating film 4 and the distribution box 2, that is, the distribution box 2 can supply power to the heating film 4. In this way, during heating of the cell, power is supplied to the heating film 4 through the distribution box 2, so that the heating film 4 is heated up, and then the heat is transmitted to the cell through the battery box 1, to heat up the cell. Through such an arrangement, electricity can be obtained inside the heating film 4, which eliminates a need to arrange an additional power supply for the heating film 4, thereby reducing costs.

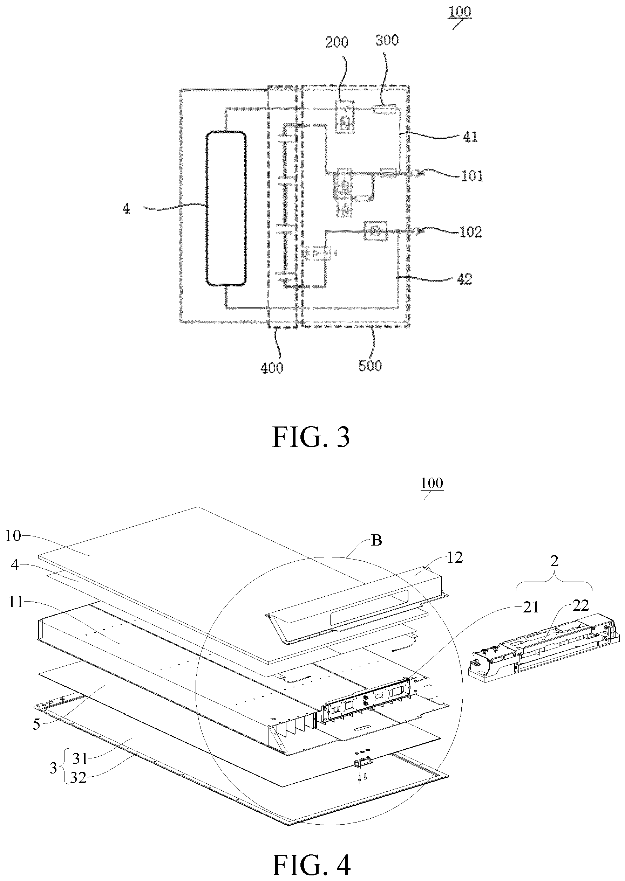

As shown in FIG. 4 and FIG. 5, the heating film 4 is mounted above the battery box 1, a top wall of the battery box 1 is provided with the lead avoidance port, and the electrode lead of the heating film 4 extends through the lead avoidance port and is electrically connected with the distribution box 2. That is to say, the heating film 4 is tightly attached to an upper part of the battery box 1 and is connected through the thermally conductive structural adhesive, thereby achieving the high thermal conductivity through the aluminum alloy battery box 1.

In some embodiments, the lead avoidance port includes a positive avoidance port 71 and a negative avoidance port 72. As shown in FIG. 5, the positive avoidance port 71 and the negative avoidance port 72 are respectively located in two side areas of the top wall of the battery box 1, so as to reduce difficulty in forming the positive avoidance port and the negative avoidance port, and to facilitate mounting and connection of another structure. The positive lead 41 of the heating film 4 extends through the positive avoidance port 71 and is electrically connected with the distribution box 2. The negative lead 42 of the heating film 4 extends through the negative avoidance port 72 and is electrically connected with the distribution box 2. That is to say, the electrode lead of the heating film 4 directly passes through the lead avoidance port and is electrically connected with the distribution box 2, which reduces a distance of connection between the electrode lead and the distribution box, reduces an entire volume of the battery pack 100, and facilitates formation of a heating circuit between the heating film 4 and the distribution box 2, that is, the distribution box 2 can supply power to the heating film 4. In this way, during heating of the cell, power is supplied to the heating film 4 through the distribution box 2, so that the heating film 4 is heated up, and then the heat is transmitted to the cell through the battery box 1, to heat up the cell.

In some embodiments, the battery pack 100 further includes a sealing plate 10. The sealing plate 10 is mounted above the battery box 1, and the heating film 4 is located between the sealing plate 10 and the battery box 1. It may be understood that, as shown in FIG. 4 and FIG. 5, the heating film 4 is arranged between the sealing plate 10 and the battery box 1. The sealing plate 10 may be constructed as a plate-shaped structure, to facilitate mounting of the sealing plate 10 above the battery box 1, thereby sealing the positive avoidance port 71 and the negative avoidance port 72 through the sealing plate 10, and protecting the heating film 4.

Further, the heating film 4 is located between the sealing plate 10 and the battery box 1. In other words, the heating film 4 is arranged between the sealing plate 10 and the battery box 1. The sealing plate 10 protects the heating film 4, and is configured to be turned on at a low temperature to heat the battery pack 100. In this way, thermal uniformity of the battery pack 100 is realized, and the service life of the cell is increased.

It should be noted that, as shown in FIG. 3, the heating film 4 is electrically connected with the distribution box 2, which forms a heating circuit for the battery pack 100. The positive lead 41 and the negative lead 42 of the heating film 4 respectively pass through a cell area 400 and a distribution box area 500 and are connected with a battery pack positive lead 101 and a battery pack negative lead 102. In addition, a relay 200 and a fuse 300 are further connected to a line of the positive lead 41 of the heating film 4, to adjust and control the heating circuit, so as to enhance safety of the heating circuit. Moreover, when the heating film 4 is electrically connected with the distribution box 2, the heating film may be turn on in a case that the battery pack 100 is at a low temperature, to heat the cell. In this way, the thermal uniformity of the battery pack 100 is realized, which increases the service life of the cell, and enhances the practicality and safety of the battery pack 100.

In some embodiments, as shown in FIG. 4, the bottom protection plate 3 includes a groove area 31 recessed downward and a connection turnup 32 surrounding the groove area 31. The thermoregulation member 5 is mounted in the groove area 31. The groove area 31 and the connection turnup 32 may be integrally formed to reduce processing difficulty.

Specifically, the groove area 31 is recessed in away from the battery box 1, to form an avoidance space. The thermoregulation member 5 is located in the groove area 31, that is, during specific mounting, the thermoregulation member 5 is mounted between the battery box 1 and the bottom protection plate 3, and the thermoregulation member 5 is located between the groove area 31 and the battery box 1. Therefore, since the groove area 31 gives way to the thermoregulation member 5, quick mounting of the thermoregulation member 5 is realized, and since the groove area 31 limits the thermoregulation member 5, random movement of the thermoregulation member is prevented.

The connection turnup 32 is configured to be detachably connected with the battery box 1, which facilitates detachable mounting of the bottom protection plate 3 to a lower side of the battery box 1, reduces mounting difficulty, and facilitates detachment of the bottom protection plate 3, thereby reducing maintenance costs of the battery pack 100, and enhancing the practicality of the battery pack 100.

In some embodiments, as shown in FIG. 2, the battery box 1 further includes a cell mounting cavity 111.

The cell mounting cavity 111 is formed in an internal space of the box portion 11. The cell mounting cavity 111 is configured for the cell to be mounted, and the cell is electrically connected with the distribution box 2. Multiple cell mounting cavities 111 may be arranged, so that multiple cells may be separately mounted in the cell mounting cavities 111, thereby facilitating assembly of the cells, and realizing support and protection of the cells through the cell mounting cavities 111.

As shown in FIG. 1, the distribution cavity 13 is located at an end portion of the cell mounting cavity 111, and the cell is electrically connected with the distribution box 2, to reduce a distance of connection between the cell and the distribution box 2, thereby improving a volume integration of the battery pack 100, reducing the entire volume of the battery pack 100, and facilitating the electrical connection between the cell and the distribution box 2, and thus enhancing the practicality of the battery pack 100.

As shown in FIG. 1 and FIG. 2, in some embodiments, the battery box 1 includes the box portion 11 and the sealing cover 12.

The heating film 4 is connected with the box portion 11, which is configured to be turned on at a low temperature to heat the battery pack 100, so as to achieve thermal uniformity of the battery pack 100, thereby improving the service life of the cell. In addition, the heating film 4 is mounted to the outer side of the battery box 1 and is connected through the thermally conductive structural adhesive, so that surroundings of the cell can be in an environment with a uniform temperature during heating or cooling through high thermal conductivity of the aluminum alloy battery box, thereby reducing life degradation of lithium batteries caused by non-uniform temperatures.

The sealing cover 12 may be constructed as a structure with an opening. The sealing cover 12 is mounted to an end portion of the box portion 11 and defines the distribution cavity 13 with the box portion 11, so as to fixedly mount the distribution box 2 in the distribution cavity 13, thereby preventing displacement or detachment of the distribution box 2, and enhancing stability of the distribution box 2. Moreover, the opening of the sealing cover 12 is recessed away from an upper surface of the box portion 11, so as to mount the sealing cover 12 on an upper side of the box portion 11. Further, the sealing cover 12 and the box portion 11 jointly define the distribution cavity 13 for mounting the distribution box 2. The sealing cover 12 is provided with the mounting port 121. The mounting port 121 is arranged on a side wall of the sealing cover 12. The mounting port 121 may be constructed as an elongated hole. The mounting port 121 is configured to give way to the panel 21, to facilitate user operations, thereby improving convenience of the user operations. It may be understood that during specific mounting, the distribution box 2 may be first mounted to an upper surface of the box portion 11, then the sealing cover 12 is mounted to the distribution box 2, and the panel 21 protrudes out through the mounting port 121. In this way, the sealing cover 12 can protect the distribution box 2, which prevents the distribution box 2 from direct impact, and facilitates the user operations on the distribution box 2 through the panel 21 at the mounting port 121, thereby enhancing the safety and practicality of the distribution box 2.

It should be noted that, the sealing cover 12 and the upper surface of the box portion 11 are sealed by using the bolt and the compressible material through mechanical compression. A level of the sealing is IP67, which enhances the sealing and safety of the battery pack 100.

A vehicle in the embodiments of the present invention is briefly described below.

As shown in FIG. 6, a vehicle in the embodiments of the present invention includes the above battery pack 100. Since the vehicle in the embodiments of the present invention is provided with the above battery pack 100, a battery storage unit of the vehicle has a simple structure and requires low costs, thereby reducing manufacturing costs of the whole vehicle.

In the descriptions of the present invention, it should be understood that orientation or position relationships indicated by the terms such as "center", "longitudinal", "transverse", "length", "width", "thickness", "up", "down", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present invention, rather than indicating or implying that the mentioned device or element needs to have a particular orientation or be constructed and operated in a particular orientation. Therefore, such terms should not be construed as a limitation on the present invention.

In addition, the terms "first" and "second" are merely used for the purpose of description, and shall not be construed as indicating or implying relative importance or implying a quantity of indicated technical features. Therefore, features defined by "first" and "second" may explicitly or implicitly include one or more such features. In the descriptions of the present invention, "multiple" means more than two, unless otherwise definitely and specifically defined.

In the present disclosure, unless otherwise explicitly specified or defined, the terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. A person of ordinary skill in the art may understand the specific meanings of the above terms in the present disclosure according to specific situations.

In the present disclosure, unless otherwise explicitly specified and defined, a first feature being "on" or "under" a second feature may indicate that the first feature is in direct contact with the second feature, or the first feature is in indirect contact with the second feature by using an intermediate medium. In addition, the first feature being "above", "over", or "on" the second feature may indicate that the first feature is directly above or obliquely above the second feature, or may merely indicate that the first feature is at a higher horizontal position than the second feature. The first feature being "below", "under", and "beneath" the second feature may indicate that the first feature is directly below or obliquely below the second feature, or merely indicates that the first feature is at a lower horizontal position than the second feature.

In the descriptions of the specification, a description with reference to terms such as "an embodiment", "some embodiments", "an example", "a specific example", or "some examples" means that specific features, structures, materials, or characteristics described with reference to the embodiment or the example is included in at least one embodiment or example of the present invention. In this specification, exemplary descriptions of the above terms are not necessarily directed at the same embodiment or example. Besides, the specific features, the structures, the materials, or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although the embodiments of the present invention have been shown and described above, it may be understood that, the above embodiments are exemplary and should not be understood as a limitation on the present invention. A person of ordinary skill in the art may make changes, modifications, replacements, or variations to the above embodiments within the scope of the present invention as defined by the appended claims.

### Reference Numerals:

Battery pack 100,
Battery box 1, Box portion 11, Cell mounting cavity 111, Sealing cover 12, Mounting port 121, Distribution cavity 13, Distribution box 2, Panel 21, Distribution module 22, Bottom protection plate 3, Groove area 31, Connection turnup 32, Heating film 4, Positive lead 41, Negative lead 42, Thermoregulation member 5, Adapter 51, Refrigerant inlet/outlet joint 6, Outer inlet 61, Outer outlet 62, Positive avoidance port 71, Negative avoidance port 72, Liquid cooling avoidance port 8, Sealing plate 10,
Battery pack positive lead 101, Battery pack negative lead 102, First flow channel 103, Second flow channel 104, Adapter inlet 105, Adapter outlet 106, Relay 200, Fuse 300, Cell area 400, Distribution box area 500.

## Claims

1. A battery pack (100), comprising:
a battery box (1), the battery box (1) having a power distribution cavity (13); a power distribution box (2) being arranged in the power distribution cavity (13); the power distribution box (2) comprising a panel (21); and the panel (21) having a first flow channel (103) and a refrigerant inlet/outlet joint (6) in communication with the first flow channel (103); and
a thermoregulation member (5), the thermoregulation member (5) being connected with the battery box (1); and the thermoregulation member (5) having a second flow channel (104) in communication with the first flow channel (103),
wherein the battery box (1) further has a cell mounting cavity (111), the cell mounting cavity (111) being configured for a cell to be mounted; the power distribution cavity (13) being located at an end portion of the cell mounting cavity (111); the cell being electrically connected with the power distribution box (2); and the cell may be heated or cooled through the thermoregulation member (5);
wherein the refrigerant inlet/outlet joint (6) comprises an outer inlet (61) and an outer outlet (62) arranged on an outer side surface of the panel (21); and the outer inlet (61) and the outer outlet (62) are configured to be in communication with an external pipeline;
wherein a mounting port (121) in communication with outside is arranged at the power distribution cavity; the panel (21) is arranged directly facing the mounting port (121); and the outer inlet (61) and the outer outlet (62) extend out through the mounting port (121); and
wherein the battery box (1) comprises a box portion (11) and a sealing cover (12); the thermoregulation member (5) is connected with the box portion (11); the sealing cover (12) is mounted to an end portion of the box portion (11) to define the power distribution cavity (13) with the box portion (11); and the sealing cover (12) is provided with the mounting port (121).

2. The battery pack (100) according to claim 1, wherein the thermoregulation member (5) is arranged below the battery box (1); a liquid cooling avoidance port (8) is arranged on a bottom wall of the power distribution cavity (13); and an adapter (51) of the second flow channel (104) extends through the liquid cooling avoidance port (8) and is in communication with the first flow channel (103).

3. The battery pack (100) according to claim 2, wherein the liquid cooling avoidance port (8) is constructed as an oblong port; the adapter (51) comprises an adapter inlet (105) and an adapter outlet (106); and the adapter inlet (105) and the adapter outlet (106) both extend into the power distribution cavity (13) through the liquid cooling avoidance port (8).

4. The battery pack (100) according to claim 3, wherein the outer inlet (61) is in communication with the adapter inlet (105); the outer outlet (62) is in communication with the adapter outlet (106).

5. The battery pack (100) according to any one of claims 2 to 4, further comprising a bottom protection plate (3), the bottom protection plate (3) being arranged to cover a bottom of the battery box (1); and the thermoregulation member (5) being located between the battery box (1) and the bottom protection plate (3).

6. The battery pack (100) according to any one of claims 2 to 5, further comprising a heating film (4), the heating film (4) being mounted above or below the battery box (1); and the heating film (4) being electrically connected with the power distribution box (2).

7. The battery pack (100) according to claim 6, wherein the heating film (4) is arranged between the battery box (1) and the thermoregulation member (5); a lead avoidance port is arranged on the bottom wall of the power distribution cavity (13); the lead avoidance port is spaced apart from the liquid cooling avoidance port (8); and an electrode lead of the heating film (4) extends through the lead avoidance port to be electrically connected with the power distribution box (2).

8. The battery pack (100) according to claim 6 or 7, wherein the heating film (4) is arranged above the battery box (1); a top wall of the battery box (1) is provided with a lead avoidance port; and an electrode lead of the heating film (4) extends through the lead avoidance port to be electrically connected with the power distribution box (2).

9. The battery pack (100) according to claim 8, further comprising a sealing plate (10), the sealing plate (10) being mounted above the battery box (1); and the heating film (4) being located between the sealing plate (10) and the battery box (1).

10. The battery pack (100) according to claim 5, wherein the bottom protection plate (3) comprises a recess area (31) recessed downward and a connection turnup (32) surrounding the recess area (31); the connection turnup (32) is configured to be detachably connected with the battery box (1); and the thermoregulation member (5) is mounted in the recess area (31).

11. A vehicle, comprising the battery pack (100) according to any one of claims 1 to 10.

## Patentansprüche

1. Batteriepack (100), umfassend:
einen Batteriekasten (1), wobei der Batteriekasten (1) einen Stromverteilungshohlraum (13) aufweist; einen Stromverteilungskasten (2), der in dem Stromverteilungshohlraum (13) angeordnet ist; wobei der Stromverteilungskasten (2) eine Platte (21) umfasst; und wobei die Platte (21) einen ersten Strömungskanal (103) und eine Kühlmitteleinlass-/-auslassverbindung (6) in Verbindung mit dem ersten Strömungskanal (103) aufweist; und
ein Thermoregulationselement bzw. Wärmeregulierungselement (5), wobei das Thermoregulationselement (5) mit dem Batteriekasten (1) verbunden ist; und das Thermoregulationselement (5) einen zweiten Strömungskanal (104) in Verbindung mit dem ersten Strömungskanal (103) aufweist,
wobei der Batteriekasten (1) ferner einen Zellenbefestigungshohlraum (111) aufweist, wobei der Zellenbefestigungshohlraum (111) dazu konfiguriert ist, eine Zelle zu befestigen; wobei der Stromverteilungshohlraum (13) an einem Endabschnitt des Zellenbefestigungshohlraums (111) angeordnet ist; wobei die Zelle elektrisch mit dem Stromverteilungskasten (2) verbunden ist; und wobei die Zelle durch das Thermoregulationselement (5) erwärmt oder gekühlt werden kann;
wobei die Kühlmitteleinlass-/-auslassverbindung (6) einen äußeren Einlass (61) und einen äußeren Auslass (62) umfasst, die an einer äußeren Seitenfläche der Platte (21) angeordnet sind; und der äußere Einlass (61) und der äußere Auslass (62) dazu konfiguriert sind, mit einer externen Rohrleitung in Verbindung zu stehen;
wobei eine Montageöffnung (121) in Verbindung mit der Außenseite an dem Energieverteilungshohlraum angeordnet ist; die Platte (21) direkt der Montageöffnung (121) gegenüberliegend angeordnet ist; und der äußere Einlass (61) und der äußere Auslass (62) sich durch die Montageöffnung (121) nach außen erstrecken; und
wobei der Batteriekasten (1) einen Kastenabschnitt (11) und eine Dichtungsabdeckung (12) umfasst; das Wärmeregulierungselement (5) mit dem Kastenabschnitt (11) verbunden ist; die Dichtungsabdeckung (12) an einem Endabschnitt des Kastenabschnitts (11) angebracht ist, um den Stromverteilungshohlraum (13) mit dem Kastenabschnitt (11) zu definieren; und die Dichtungsabdeckung (12) mit der Montageöffnung (121) versehen ist.

2. Batteriepack (100) gemäß Anspruch 1, wobei das Thermoregulationselement (5) unterhalb des Batteriegehäuses (1) angeordnet ist; eine Flüssigkeits-Kühlvermeidungsöffnung (8) an einer Bodenwand des Energieverteilungshohlraums (13) angeordnet ist; und ein Adapter (51) des zweiten Strömungskanals (104) sich durch die Flüssigkeits-Kühlvermeidungsöffnung (8) erstreckt und mit dem ersten Strömungskanal (103) in Verbindung steht.

3. Batteriepack (100) gemäß Anspruch 2, wobei die Öffnung (8) zur Vermeidung von Flüssigkeitskühlung als längliche Öffnung ausgebildet ist; der Adapter (51) einen Adaptereinlass (105) und einen Adapterauslass (106) umfasst; und der Adaptereinlass (105) und der Adapterauslass (106) sich beide durch die Öffnung (8) zur Vermeidung von Flüssigkeitskühlung in den Stromverteilungshohlraum (13) erstrecken.

4. Batteriepack (100) gemäß Anspruch 3, wobei der äußere Einlass (61) mit dem Adaptereinlass (105) in Verbindung steht; der äußere Auslass (62) mit dem Adapterauslass (106) in Verbindung steht.

5. Batteriepack (100) gemäß einem der Ansprüche 2 bis 4, ferner umfassend eine Bodenschutzplatte (3), wobei die Bodenschutzplatte (3) so angeordnet ist, dass sie einen Boden des Batteriekastens (1) abdeckt; und das Thermoregulationselement (5) zwischen dem Batteriekasten (1) und der Bodenschutzplatte (3) angeordnet ist.

6. Batteriepack (100) gemäß einem der Ansprüche 2 bis 5, ferner umfassend eine Heizfolie (4), wobei die Heizfolie (4) oberhalb oder unterhalb des Batteriekastens (1) angebracht ist; und die Heizfolie (4) elektrisch mit dem Stromverteilerkasten (2) verbunden ist.

7. Batteriepack (100) gemäß Anspruch 6, wobei die Heizfolie (4) zwischen dem Batteriegehäuse (1) und dem Thermoregulationselement (5) angeordnet ist; eine Leitungsumgehungsöffnung an der Bodenwand des Stromverteilungshohlraums (13) angeordnet ist; die Leitungsumgehungsöffnung von der Flüssigkühlungsumgehungsöffnung (8) beabstandet ist; und eine Elektrodenleitung der Heizfolie (4) sich durch die Leitungsumgehungsöffnung erstreckt, um mit dem Stromverteilungsgehäuse (2) elektrisch verbunden zu sein.

8. Batteriepack (100) gemäß Anspruch 6 oder 7, wobei die Heizfolie (4) oberhalb des Batteriekastens (1) angeordnet ist; eine obere Wand des Batteriekastens (1) mit einer Anschlussvermeidungsöffnung versehen ist; und eine Elektrodenleitung der Heizfolie (4) sich durch die Anschlussvermeidungsöffnung erstreckt, um mit dem Stromverteilerkasten (2) elektrisch verbunden zu werden.

9. Batteriepack (100) gemäß Anspruch 8, ferner mit einer Dichtungsplatte (10), wobei die Dichtungsplatte (10) oberhalb des Batteriekastens (1) angebracht ist und die Heizfolie (4) zwischen der Dichtungsplatte (10) und dem Batteriekasten (1) angeordnet ist.

10. Batteriepack (100) gemäß Anspruch 5, wobei die Bodenschutzplatte (3) einen nach unten vertieften Aussparungsbereich (31) und einen den Aussparungsbereich (31) umgebenden Verbindungsumschlag (32) aufweist; der Verbindungsumschlag (32) dazu konfiguriert ist, lösbar mit dem Batteriekasten (1) verbunden zu werden; und das Thermoregulationselement (5) in dem Aussparungsbereich (31) angebracht ist.

11. Fahrzeug, umfassend das Batteriepaket (100) gemäß einem der Ansprüche 1 bis 10.

## Revendications

1. Bloc de batterie (100), comprenant :
un boîtier de batterie (1), le boîtier de batterie (1) ayant une cavité de distribution de puissance (13) ; un boîtier de distribution de puissance (2) étant disposé dans la cavité de distribution de puissance (13) ; le boîtier de distribution de puissance (2) comprenant un panneau (21) ; et le panneau (21) ayant un premier canal d'écoulement (103) et un joint d'entrée/sortie de réfrigérant (6) en communication avec le premier canal d'écoulement (103) ; et.
un élément de thermorégulation (5), l'élément de thermorégulation (5) étant relié au boîtier de batterie (1) ; et l'élément de thermorégulation (5) ayant un deuxième canal d'écoulement (104) en communication avec le premier canal d'écoulement (103),
dans lequel la boîte de batterie (1) possède en outre une cavité de montage de cellule (111), la cavité de montage de cellule (111) étant configurée pour le montage d'une cellule ; la cavité de distribution de puissance (13) étant située à une partie d'extrémité de la cavité de montage de cellule (111) ; la cellule étant connectée électriquement avec la boîte de distribution de puissance (2) ; et la cellule peut être chauffée ou refroidie à travers l'élément de thermorégulation (5) ;
dans lequel le joint d'entrée/sortie de réfrigérant (6) comprend une entrée extérieure (61) et une sortie extérieure (62) disposées sur une surface latérale extérieure du panneau (21) ; et l'entrée extérieure (61) et la sortie extérieure (62) sont configurées pour être en communication avec une canalisation extérieure ;
dans lequel un port de montage (121) en communication avec l'extérieur est disposé au niveau de la cavité de distribution de puissance ; le panneau (21) est disposé directement en face du port de montage (121) ; et l'entrée extérieure (61) et la sortie extérieure (62) s'étendent vers l'extérieur à travers le port de montage (121) ; et
dans lequel la batterie d'alimentation (1) comprend une partie de boîte (11) et un couvercle d'étanchéité (12) ; l'élément de thermorégulation (5) est relié à la partie de boîte (11) ; le couvercle d'étanchéité (12) est monté sur une partie d'extrémité de la partie de boîte (11) pour définir la cavité de distribution d'énergie (13) avec la partie de boîte (11) ; et le couvercle d'étanchéité (12) est pourvu de l'orifice de montage (121).

2. Bloc batterie (100) selon la revendication 1, dans lequel l'élément de thermorégulation (5) est disposé sous le boîtier de batterie (1) ; un port d'évitement de refroidissement de liquide (8) est disposé sur une paroi de fond de la cavité de distribution de puissance (13) ; et un adaptateur (51) du deuxième canal d'écoulement (104) s'étend à travers le port d'évitement de refroidissement de liquide (8) et est en communication avec le premier canal d'écoulement (103).

3. Bloc batterie (100) selon la revendication 2, dans lequel le port d'évitement du refroidissement liquide (8) est construit comme un port oblong ; l'adaptateur (51) comprend une entrée d'adaptateur (105) et une sortie d'adaptateur (106) ; et l'entrée d'adaptateur (105) et la sortie d'adaptateur (106) s'étendent toutes deux dans la cavité de distribution d'énergie (13) à travers le port d'évitement du refroidissement liquide (8).

4. Bloc de batteries (100) selon la revendication 3, dans lequel l'entrée extérieure (61) est en communication avec l'entrée de l'adaptateur (105) ; la sortie extérieure (62) est en communication avec la sortie de l'adaptateur (106).

5. Bloc batterie (100) selon l'une quelconque des revendications 2 à 4, comprenant en outre une plaque de protection de fond (3), la plaque de protection de fond (3) étant agencée pour recouvrir un fond du bloc batterie (1) ; et l'élément de thermorégulation (5) étant situé entre le bloc batterie (1) et la plaque de protection de fond (3).

6. Le bloc batterie (100) selon l'une quelconque des revendications 2 à 5, comprend en outre un film chauffant (4), le film chauffant (4) étant monté au-dessus ou au-dessous du boîtier de batterie (1) ; et le film chauffant (4) étant relié électriquement au boîtier de distribution d'énergie (2).

7. Bloc batterie (100) selon la revendication 6, dans lequel le film chauffant (4) est disposé entre le boîtier de batterie (1) et l'élément de thermorégulation (5) ; un port d'évitement de plomb est disposé sur la paroi inférieure de la cavité de distribution d'énergie (13) ; le port d'évitement de plomb est espacé du port d'évitement de refroidissement liquide (8) ; et un fil d'électrode du film chauffant (4) s'étend à travers le port d'évitement de plomb pour être connecté électriquement avec le boîtier de distribution d'énergie (2).

8. Bloc batterie (100) selon la revendication 6 ou 7, dans lequel le film chauffant (4) est disposé au-dessus du boîtier de batterie (1) ; une paroi supérieure du boîtier de batterie (1) est prévue avec un port d'évitement de plomb ; et un fil d'électrode du film chauffant (4) s'étend à travers le port d'évitement de plomb pour être connecté électriquement avec le boîtier de distribution d'alimentation (2).

9. Bloc batterie (100) selon la revendication 8, comprenant en outre une plaque d'étanchéité (10), la plaque d'étanchéité (10) étant montée au-dessus du boîtier de batterie (1) ; et le film chauffant (4) étant situé entre la plaque d'étanchéité (10) et le boîtier de batterie (1).

10. Bloc de batteries (100) selon la revendication 5, dans lequel la plaque de protection inférieure (3) comprend une zone de renfoncement (31) évidée vers le bas et un retournement de connexion (32) entourant la zone de renfoncement (31) ; le retournement de connexion (32) est configuré pour être connecté de manière amovible avec le boîtier de batteries (1) ; et l'élément de thermorégulation (5) est monté dans la zone de renfoncement (31).

11. Véhicule, comprenant le bloc de batteries (100) selon l'une quelconque des revendications 1 à 10.
